# FASCICULE DE BREVET EUROPEEN

(11) **EP 1 413 737 B1**
(45) Date de publication et mention de la délivrance du brevet: **13.06.2007**
(21) Numéro de dépôt: 03292363.3
(22) Date de dépôt: 26.09.2003
(51) Int. Cl.: F02K 1/76

(54) **Inverseur de poussée électromécanique pour turboréacteur à synchronisation des dispositifs de verrouillage**
Elektromechanische Schubumkehr-Vorrichtung eines Strahltriebwerkes mit synchronisierter Verriegelungsvorrichtung
Jet engine electromechanical thrust reverser with synchronisation of its locking elements

(30) Priorité: 25.10.2002 FR 0213410
(43) Date de publication de la demande: 28.04.2004
(73) Titulaire: HISPANO SUIZA, 92700 Colombes (FR)
(72) Inventeur: Colotte, Baptiste,, 77000 Melun, (FR); Courpied, Alexandre,, 75007 Paris (FR); Croixmarie, Marc,, 91830 Auvernaux, (FR); Joland, Patrick,, 77166 Evry Gregy sur Yerres, (FR); Le Gouellec, Gilles,, 75018 Paris, (FR); Michaud, Marion,, 94320 Thiais, (FR)
(74) Mandataire: Boura, Olivier

(56) Documents cités:
- EP-A- 0 542 611
- EP-A- 0 763 654
- EP-A- 0 843 089
- US-A- 4 409 884
- US-A- 5 720 449

## Description

La présente invention se rapporte au domaine général des inverseurs de poussée pour turboréacteur à double flux. Elle vise plus particulièrement un inverseur de poussée électromécanique comportant au moins deux éléments déplaçables coopérant, en position d'ouverture de l'inverseur, à la production de l'inversion de poussée, tel que, par exemple, un inverseur de poussée à grilles, à portes ou à coquilles.

Les inverseurs de poussée équipant les turboréacteurs à double flux sont bien connus dans le domaine de l'aéronautique. Ils servent à augmenter la sécurité d'un avion en fournissant une aide au freinage lors de l'atterrissage de celui-ci. Les inverseurs de poussée se présentent généralement sous la forme d'au moins deux éléments mobiles, telles que des portes coulissantes, qui sont susceptibles d'être déplacés par rapport à la nacelle du turboréacteur par l'intermédiaire de vérins de commande de façon à constituer, lors du fonctionnement en inversion de poussée c'est à dire en position d'ouverture, un obstacle pour une partie des gaz issus du turboréacteur qui sont redirigés vers l'avant de façon à fournir une poussée inverse à l'avion.

Les inverseurs de poussée sont munis de différents niveaux de verrouillage qui permettent d'assurer individuellement la retenue des portes de l'inverseur de poussée. Généralement, ces niveaux de verrouillage sont réalisés par trois dispositifs de verrouillage par inverseur : un verrou primaire, un verrou secondaire et un verrou tertiaire. Chacun de ces verrous est destiné à reprendre les chargements des portes en cas de défaillance des deux autres verrous. Les verrous primaires et secondaires sont individuellement commandés par un boîtier de commande de l'inverseur de poussée et le verrou tertiaire est directement commandé depuis le cockpit de l'avion.

EP 0 763 654 décrit un inverseur de poussée dont les deux portes sont chacune munies de verrous indépendents. US 4, 409, 884 concerne la synchronisation d'une paire de verrous hydrauliques aéronautiques.

Afin d'obtenir une parfaite sécurité lors de l'ouverture et de la fermeture de l'inverseur, il est nécessaire d'assurer, entre les portes, une synchronisation de la commande de leurs verrous, et notamment de leur verrou primaire. Dans les inverseurs de poussée de type connu, les verrous primaires sont commandés en parallèle lors des séquences d'ouverture et de fermeture de l'inverseur. Il n'existe aucun moyen permettant de réellement synchroniser leur commande de sorte que si l'un des verrous primaires vient à se bloquer, rien n'empêche une action sur l'autre verrou primaire. L'absence d'une telle synchronisation entre la commande des verrous primaires peut être particulièrement préjudiciable pour l'inverseur de poussée, notamment en cas de défaillance ou de blocage de l'un de ces verrous.

### Objet et résumé de l'invention

La présente invention vise donc à pallier un tel inconvénient en proposant un inverseur de poussée permettant d'obtenir une réelle synchronisation dans la commande des verrous primaires afin d'assurer une parfaite sécurité, notamment en cas de panne de l'un des boîtiers de commande des portes de l'inverseur.

A cet effet, il est prévu un inverseur de poussée pour turboréacteur, selon la revendication 1.

En l'absence de l'un de ces deux ordres, la commande du dispositif de verrouillage de chaque porte n'est pas possible. De la sorte, la commande des dispositifs de verrouillage de chaque porte peut être parfaitement synchronisée. De plus, en cas de panne de l'un des deux boîtiers électroniques de commande, les dispositifs de verrouillage restent en position de verrouillage (si la panne intervient au début d'une séquence d'ouverture de l'inverseur) ou freinent automatiquement les portes (si la panne intervient lors du déplacement de l'inverseur), ce qui accroît la sécurité de l'inverseur.

Chaque boîtier électronique de commande comporte un boîtier d'alimentation électrique relié au dispositif de verrouillage de la porte qui lui est associée par l'intermédiaire d'un interrupteur et un boîtier de synchronisation commandant l'ouverture et la fermeture de l'interrupteur associé au dispositif de verrouillage de l'autre porte.

Avantageusement, chaque dispositif de verrouillage verrouille en position la porte qui lui est associée lorsqu'il n'est pas alimenté électriquement, et déverrouille ladite porte à la fois lorsque le boîtier d'alimentation électrique du boîtier électronique de commande contrôlant ladite porte délivre une tension électrique et lorsque le boîtier de synchronisation du boîtier électronique de commande contrôlant l'autre porte commande une fermeture de l'interrupteur associé audit dispositif de verrouillage.

Chaque boîtier de synchronisation est relié à chacune des deux voies du calculateur électronique pleine autorité.

De préférence, à chaque porte est associé un dispositif de verrouillage en butée commandé depuis le cockpit de l'avion.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un schéma illustrant un exemple de réalisation de l'inverseur de poussée selon l'invention ; et
- la figure 2 est un schéma fonctionnel partiel de l'exemple de réalisation de l'inverseur de poussée de la figure 1.

### Description détaillée d'un mode de réalisation

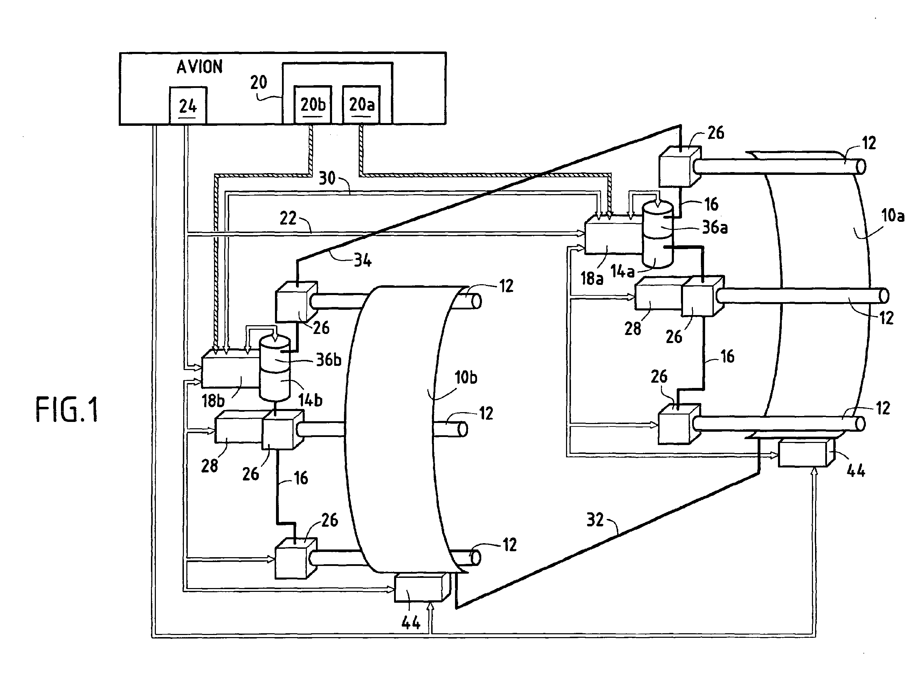

On se réfère tout d'abord à la figure 1 qui illustre un exemple de réalisation d'un inverseur de poussée selon l'invention.

L'inverseur de poussée comporte deux portes 10a, 10b déplaçables chacune entre une position d'ouverture et une position de fermeture de l'inverseur par au moins un vérin de commande 12 (trois vérins sont représentés sur la figure 1, un vérin central et deux vérins positionnés aux deux extrémités latérales de chaque porte).

L'inverseur comporte en outre deux moteurs électriques 14a, 14b contrôlant chacun le déplacement d'une porte. Ces moteurs électriques entraînent les vérins 12 de commande de chaque porte 10a, 10b par l'intermédiaire d'arbres de transmission 16 reliant les vérins de commande de chaque porte entre eux.

Chaque moteur électrique 14a, 14b est directement monté sur un boîtier électronique de commande 18a, 18b qui gère toute la séquence de déplacement des deux portes et régule la vitesse de rotation du moteur électrique. Chaque boîtier électronique de commande 18a, 18b est relié électriquement à l'une des deux voies 20a, 20b d'un calculateur électronique pleine autorité 20 communément dénommé FADEC (Full Authority Digital Engine Control). L'ordre de déploiement ou de rétraction de l'inverseur de poussée est émis par le calculateur FADEC vers les boîtiers électroniques 18a, 18b. Il est également possible d'intégrer le boîtier électronique dans le calculateur FADEC.

L'alimentation électrique des boîtiers électroniques de commande 18a, 18b est effectuée par l'intermédiaire d'un harnais électrique 22 connecté sur le réseau électrique 24 de l'avion sur lequel le turboréacteur est monté. Les boîtiers électroniques de commande transforment et adaptent le signal électrique afin d'alimenter les moteurs électriques 14a, 14b.

Les vérins 12 de commande des portes de l'inverseur sont du type électromécanique. Ils sont entraînés par des boîtiers d'engrenages 26 montés sur chaque vérin. La loi de commande (en vitesse ou de type tout ou rien) des portes 10a, 10b de l'inverseur est transmise des boîtiers électroniques vers chaque vérin de commande 12 par l'intermédiaire des moteurs électriques 14a, 14b, des arbres de transmission 16 et des boîtiers d'engrenages 26.

Une prise de mouvement 28 peut être prévue au niveau de l'un des vérins de commande 12 afin de permettre une commande manuelle de la porte associée au vérin de commande, notamment lors des opérations de maintenance de l'inverseur de poussée. Sur l'exemple illustré par la figure 1, le vérin 12 central présente une telle prise de mouvement 28 au niveau de son boîtier d'entraînement 26. Les boîtiers d'entraînement de chaque porte étant reliés entre eux, cette prise permet ainsi à un opérateur en charge de la maintenance de piloter l'ouverture et/ou la fermeture des portes de l'inverseur à l'aide d'une seule manivelle, par exemple. L'accès à la prise de mouvement 28 de chaque porte peut être reliée électriquement au boîtier électronique de commande 18a, 18b et ainsi désactiver l'alimentation électrique lors de ces opérations de maintenance afin d'éviter tout déploiement intempestif de l'inverseur.

Les boîtiers électroniques de commande 18a, 18b peuvent en outre échanger des données entre eux par l'intermédiaire d'une liaison électrique 30 de type harnais. Ces échanges de données entre les deux boîtiers électroniques permettent notamment d'assurer une comparaison des informations de positions provenant des deux portes. Un lien mécanique 32 entre les deux portes 10a, 10b et un arbre flexible de synchronisation 34 reliant entre eux des vérins de chaque porte peuvent être prévus afin de faciliter la synchronisation du déplacement des deux portes.

L'inverseur de poussée comporte trois niveaux de verrouillage qui permettent d'assurer individuellement la retenue de l'inverseur de poussée.

Un premier niveau de verrouillage est réalisé par un dispositif de blocage mécanique 36a, 36b, appelé verrou primaire, associé à chaque porte de l'inverseur. Chaque verrou primaire est monté directement sur le moteur électrique 14a, 14b et il est commandé par le boîtier électronique 18a, 18b. Ces verrous primaires 36a, 36b permettent d'assurer une retenue de la porte qui lui est associée. Les verrous primaires sont du type à commande électrique et fonctionnent sur le principe du manque de courant, c'est à dire qu'ils restent en position de verrouillage de la porte lorsqu'ils ne sont pas alimentés électriquement. Par exemple, ils peuvent être de type frein à disque ou de type blocage par pion venant entraver le mouvement de l'arbre de transmission.

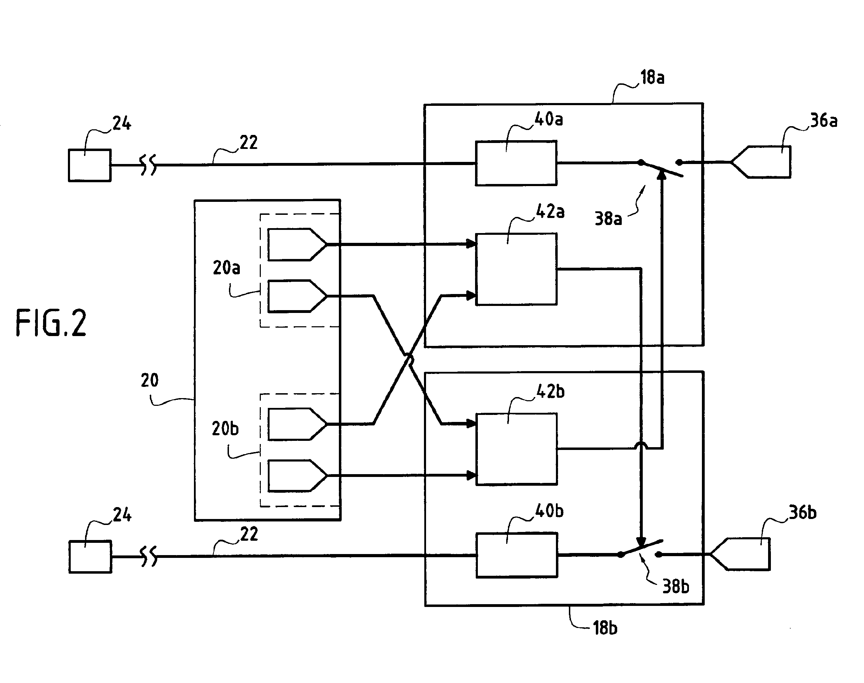

Selon l'invention, et comme représenté par la figure 2, les verrous primaires 36a, 36b sont chacun reliés, par l'intermédiaire d'un interrupteur 38a, 38b, à un boîtier d'alimentation électrique 40a, 40b contrôlé par le boîtier électronique de commande 18a, 18b. Les boîtiers d'alimentation électrique 40a, 40b reçoivent chacun une tension d'entrée alternative (par exemple de 115 Volts environ) provenant du réseau électrique 24 de l'avion par l'intermédiaire du harnais électrique 22. Cette tension d'entrée est alors redressée et filtrée afin de délivrer une tension de sortie continue (par exemple de 270 Volts environ) pour alimenter les verrous primaires 36a, 36b.

En plus des boîtiers d'alimentation électrique, chaque boîtier électronique 18a, 18b comporte un boîtier de synchronisation 42a, 42b permettant de commander l'ouverture et la fermeture de l'interrupteur 38a, 38b du verrou primaire de la porte contrôlée par l'autre boîtier électronique. Ainsi, la commande des verrous primaires 36a, 36b doit être validée simultanément par les deux boîtiers électroniques 18a, 18b. En effet, pour être actionné, chaque verrou primaire doit recevoir simultanément deux signaux : d'une part, un signal d'alimentation électrique provenant du boîtier électronique qui lui est associé par l'intermédiaire de son boîtier d'alimentation électrique 40a, 40b (ce signal se traduit par la délivrance d'une tension électrique), et d'autre part, un signal provenant du boîtier de synchronisation 42b, 42a de l'autre boîtier électronique (ce signal se traduit par la fermeture de l'interrupteur 38a, 38b qui lui est associé). En l'absence de l'un de ces deux signaux, la commande du verrou primaire de chaque porte n'est pas possible. La commande de chacun des deux verrous primaires 36a, 36b est validée par les deux boîtiers électroniques de commande 18a, 18b grâce à la répartition de l'alimentation électrique et de la commande électrique sur les deux boîtiers électroniques de commande.

En outre, compte-tenu que les deux portes 10a, 10b sont liées mécaniquement par l'intermédiaire des liens 32 et 34, le verrou primaire 36a, 36b de l'une des portes 10a, 10b constitue un second niveau de verrouillage pour l'autre porte dont il forme un verrou secondaire. Le verrou secondaire est destiné à reprendre les chargements de la porte en cas de défaillance du verrou primaire. Ainsi, si le dispositif de blocage de l'une des portes est considéré comme le verrou primaire, le dispositif de blocage de l'autre porte peut être considéré comme étant le verrou secondaire et vice-versa.

Le troisième niveau de verrouillage est réalisé par un dispositif de verrouillage en butée 44 (voir figure 1), appelé verrou tertiaire, qui est positionné à une extrémité latérale de chaque porte 10a, 10b ou d'une seule porte. Ces verrous tertiaires peuvent être reliés aux boîtiers électroniques 18a, 18b, au calculateur FADEC 20 et/ou directement au cockpit de l'avion. Ils sont avantageusement commandés directement depuis le cockpit de l'avion afin d'assurer une sûreté de fonctionnement suffisante et de s'affranchir d'éventuels modes communs. En effet, lorsque reliés au FADEC ou au cockpit de l'avion, les verrous tertiaires restent opérationnels même en cas de défaillance des boîtiers électroniques de commande. Ils permettent de reprendre les chargements de la porte de l'inverseur en cas de défaillance des verrous primaire et secondaire.

Selon une caractéristique avantageuse de l'invention, chaque boîtier de synchronisation 42a, 42b des boîtiers électroniques de commande 18a, 18b est relié aux deux voies 20a, 20b du calculateur électronique pleine autorité 20. Ainsi, le calculateur FADEC envoie deux ordres de commande, un premier ordre vers l'un des boîtiers de synchronisation 42a, 42b et un second ordre vers l'autre boîtier de synchronisation. De la sorte, il est toujours possible de commander l'inverseur de poussée, même en cas de panne de l'une des deux voies du FADEC.

La synchronisation de la commande des verrous primaires 36a, 36b de chaque porte selon l'invention présente de nombreux avantages, et notamment les avantages suivant :
- en cas de panne de l'un des deux boîtiers électroniques de commande 18a, 18b au début d'une séquence d'ouverture de l'inverseur, les deux verrous primaires 36a, 36b restent en position de verrouillage des portes ce qui accroît la sécurité de l'inverseur. En effet, dans ce cas, l'un des verrous primaires n'est plus alimenté électriquement, et l'autre verrou ne peut plus recevoir la confirmation de l'ordre provenant du boîtier de synchronisation ; et
- étant donné que les verrous primaires 36a, 36b fonctionnent sur le principe du manque de courant, toute panne électrique conduisant à la perte de l'un des deux boîtiers électroniques de commande lors du déplacement de l'inverseur de poussée entraîne automatiquement un blocage des portes par les verrous primaires. En effet, l'un des verrous se refermera par disparition de l'alimentation électrique lui permettant de rester ouvert, tandis que l'autre verrou se refermera également à la suite de l'annulation de la commande d'ouverture. Cet avantage s'applique notamment dans le cas particulier d'une détection de survitesse provenant de l'un des moteurs électriques 14a, 14b pour laquelle il est possible d'annuler la commande électrique permettant de maintenir ouverts les verrous primaires afin d'entraîner un re-verrouillage de ces derniers.

## Revendications

1. Inverseur de poussée pour turboréacteur, comportant :
- deux portes (10a, 10b) déplaçables entre une position d'ouverture et une position de fermeture de l'inverseur, chaque porte étant contrôlée par un boîtier électronique de commande (18a, 18b) relié à un calculateur électronique pleine autorité (20) ; et
- deux dispositifs de verrouillage (36a, 36b) permettant chacun de verrouiller en position la porte (10a, 10b) qui lui est associée, **caractérisé en ce que** chaque boîtier électronique de commande (18a, 18b) comporte un boîtier d'alimentation électrique (40a, 40b) relié au dispositif de verrouillage (36a, 36b) de la porte qui lui est associée par l'intermédiaire d'un interrupteur (38a, 38b) et un boîtier de synchronisation (42a, 42b) commandant l'ouverture et la fermeture de l'interrupteur associé au dispositif de verrouillage de l'autre porte de sorte que chaque dispositif de verrouillage peut être actionné uniquement sur ordres provenant simultanément des deux boîtiers électroniques de commande (18a, 18b).

2. Inverseur de poussée selon la revendication 1, **caractérisé en ce que** chaque dispositif de verrouillage (36a, 36b) verrouille en position la porte (10a, 10b) qui lui est associée lorsqu'il n'est pas alimenté électriquement, et déverrouille ladite porte à la fois lorsque le boîtier d'alimentation électrique (40a, 40b) du boîtier électronique de commande (18a, 18b) contrôlant ladite porte délivre une tension électrique et lorsque le boîtier de synchronisation (42b, 42a) du boîtier électronique de commande contrôlant l'autre porte commande une fermeture de l'interrupteur (38a, 38b) associé audit dispositif de verrouillage.

3. Inverseur de poussée selon la revendication 2, **caractérisé en ce que** chaque boîtier de synchronisation (42a, 42b) est relié à chacune des deux voies (20a, 20b) dudit calculateur électronique pleine autorité (20).

4. Inverseur de poussée selon l'une quelconque des revendications 1 à 3, **caractérisé en ce qu'**à chaque porte (10a, 10b) est associé un dispositif de verrouillage en butée (44) commandé depuis le cockpit de l'avion sur lequel ledit turboréacteur est destiné a être fixé.

5. Turboréacteur comportant au moins un inverseur de poussée selon l'une quelconque des revendications 1 à 4.

## Claims

1. A turbojet thrust reverser, comprising:
- two doors (10a, 10b) displaceable between a reverser open position and a reverser closed position, each door being controlled by a respective electronic control unit (18a, 18b) connected to a full authority digital engine controller (20); and
- two locking devices (36a, 36b) each enabling the position of the door (10a, 10b) associated therewith to be locked, **characterised in that** each electronic control unit (18a, 18b) includes an electrical power supply unit (40a, 40b) connected to the locking device (36a, 36b) of the door with which it is associated via a switch (38a, 38b), and a synchronizing unit (42a, 42b) controlling opening and closing of the switch associated with the locking device of the other door so that each locking device is capable of being actuated solely on orders coming simultaneously from both electronic control units (18a, 18b).

2. A thrust reverser according to claim 1, **characterised in that** each locking device (36a, 36b) locks the door (10a, 10b) with which it is associated in position when it is not powered electrically, and unlocks said door when simultaneously the electrical power supply unit (40a, 40b) of the electronic control unit (18a, 18b) controlling said door delivers an electrical voltage and the synchronizing unit (42a, 42b) of the electronic control unit controlling the other door causes the switch (38a, 38b) associated with said locking device to be closed.

3. A thrust reverser according to claim 2, **characterised in that** each synchronizing unit (42a, 42b) is connected to both channels (20a, 20b) of said full authority digital engine controller (20).

4. A thrust reverser according to any one of claims 1 to 3, **characterised in that** each door (10a, 10b) is associated with an abutment locking device (44) controlled from the cockpit of the airplane on which said turbojet is designed to be mounted.

5. A turbojet including at least one thrust reverser according to any one of claims 1 to 4.

## Patentansprüche

1. Schubumkehrer für ein Turbostrahltriebwerk, umfassend:
- zwei Klappen (10a, 10b), die zwischen einer Öffnungsstellung und einer Schließstellung des Umkehrers bewegbar sind, wobei jede Klappe über ein elektronisches Steuergehäuse (18a, 18b), das mit einem vollberechtigten elektronischen Rechner (20) verbunden ist, gesteuert wird; und
- zwei Verriegelungsvorrichtungen (36a, 36b), die ermöglichen, die ihnen jeweils zugeordnete Klappe (10a, 10b) in der Position zu verriegeln, **dadurch gekennzeichnet, daß** jedes elektronische Steuergehäuse (18a, 18b) ein Stromversorgungsgehäuse (40a, 40b), das mittels eines Schalters (38a, 38b) mit der Verriegelungsvorrichtung (36a, 36b) der ihm zugeordneten Klappe verbunden ist, sowie ein Synchronisierungsgehäuse (42a, 42b) umfaßt, welches das Öffnen und das Schließen des der Verriegelungsvorrichtung der anderen Klappe zugeordneten Schalters steuert, so daß jede Verriegelungsvorrichtung einzig und allein auf Befehle, die gleichzeitig von den beiden elektronischen Steuergehäusen (18a, 18b) ausgehen, betätigt werden kann.

2. Schubumkehrer nach Anspruch 1, **dadurch gekennzeichnet, daß** jede Verriegelungsvorrichtung (36a, 36b) die ihr zugeordnete Klappe (10a, 10b) in der Position verriegelt, wenn sie nicht mit Strom versorgt wird, und die genannte Klappe entriegelt, wenn gleichzeitig das Stromversorgungsgehäuse (40a, 40b) des elektronischen Steuergehäuses (18a, 18b), welches die genannte Klappe steuert, eine elektrische Spannung liefert und wenn das Synchronisierungsgehäuse (42a, 42b) des elektronischen Steuergehäuses, das die andere Klappe steuert, ein Schließen des der Verriegelungsvorrichtung zugeordneten Schalters (38a, 38b) steuert.

3. Schubumkehrer nach Anspruch 2, **dadurch gekennzeichnet, daß** jedes Synchronisierungsgehäuse (42a, 42b) mit einem jedem der zwei Wege (20a, 20b) des vollberechtigten elektronischen Rechners (20) verbunden ist.

4. Schubumkehrer nach irgendeinem der Ansprüche 1 bis 3, **dadurch gekennzeichnet, daß** jeder Klappe (10a, 10b) eine Anschlag-Verriegelungsvorrichtung (44) zugeordnet ist, die vom Cockpit des Flugzeugs aus gesteuert wird, an dem das Turbostrahltriebwerk befestigt werden soll.

5. Turbostrahltriebwerk umfassend wenigstens einen Schubumkehrer nach irgendeinem der Ansprüche 1 bis 4.
